# EUROPÄISCHE PATENTANMELDUNG

(11) **EP 2 277 679 A2**
(43) Veröffentlichungstag der Anmeldung: **26.01.2011**
(21) Anmeldenummer: 10007368.3
(22) Anmeldetag: 16.07.2010
(51) Int. Cl.: B29C 45/14

(54) **Mehrlagiger Formteil sowie Verfahren zu dessen Herstellung**

(30) Priorität: 16.07.2009 AT 11132009
(71) Anmelder: Georg Kaufmann Formenbau AG, 5453 Busslingen (CH)
(72) Erfinder: Kaufmann, Georg, 5442 Fislisbach (CH)
(74) Vertreter: Chmilewsky-Lehner, Robert

(57) **Zusammenfassung**

Die Erfindung betrifft ein Verfahren zur Herstellung eines mehrlagigen räumlichen Formteils (7), insbesondere eines Verkleidungsteils für ein Kraftfahrzeug, bei dem eine Trägerschicht (12), eine Dekorschicht (9) und ein Heizelement (11) ausgebildet werden. Die Dekorschicht (9) wird gemeinsam mit einem das Heizelement (11) bildenden elektrischen Widerstandsmaterial in einen durch Formwände (4, 5) begrenzten Formhohlraum (6) eines Spritzgietiwerkzeuges (1) eingelegt und der Formhohlraum (6) geschlossen. Im Formhohlraum (6) wird auf der von einer Ansichtsseite (10) der Dekorschicht (9) abgewendeten Seite die Trägerschicht (12) durch einen Spritzgießvorgang ausgebildet, wobei durch den aufgebauten Spritzdruck oder Schließdruck des Spritzgießwerkzeuges (1) beim Ausbilden der Trägerschicht (12) die Dekorschicht (9) gemeinsam mit dem Heizelement (11) umgeformt und an die der Ansichtsseite (10) benachbarte Formwand (5) angelegt wird.

## Beschreibung

Die Erfindung bezieht sich auf ein Verfahren zur Herstellung eines mehrlagigen räumlichen Formteils sowie einen mehrlagigen Formteil, insbesondere eines Verkleidungsteils für ein Kraftfahrzeug, wie dies in den Ansprüchen 1 und 19 beschrieben wird.

Aus der EP 1 418 091 A1 ist ein Verkleidungselement für die Kabine bzw. die Innenseite eines Kraftfahrzeuges bekannt geworden, bei welchem die abzugebende Wärmestrahlung durch ein mit elektrischer Energie beaufschlagbares Heizelement erzeugt wird. An der dem Benutzer zugewendeten Seite weist das Verkleidungsteil eine Dekorschicht auf, hinterhalb welcher sich eine Trägerschicht befindet. Zwischen der Trägerschicht und der Dekorlage ist das Heizelement angeordnet. Zur Kontaktierung des Heizelements ist in der Trägerschicht eine in etwa senkrecht zur Ansichtsseite ausgerichtete Öffnung vorgesehen, durch welche die Anschlussleitungen des Heizelements hindurchgeführt sind. An der Rückseite der Trägerschicht ist das Verbindungselement zur Bildung des elektrischen Anschlussbereichs vorgesehen. Zur leichteren Handhabung kann das Heizelement auf einer eigenen Trägerlage angeordnet sein, wobei es sich hierbei um Widerstandsdrähte handelt. Eine Verformung eines derartigen Heizelements zur Herstellung des Formteils ist dabei nicht möglich.

Der vorliegenden Erfindung liegt die Aufgabe zugrunde, ein einfaches und kostengünstiges Verfahren zur Herstellung eines räumlichen Formteils anzugeben sowie ein derartiges Formteil zu schaffen, welches bei Beaufschlagung mit elektrischer Energie Wärme abgibt.

Diese Aufgabe der Erfindung wird durch das Vorgehen gemäß den Merkmalen des Anspruches 1 gelöst. Der sich durch dieses Vorgehen ergebende Vorteil liegt darin, dass so je nach Anwendungsfall unterschiedlichste Dekorschichten mit dem entsprechenden Heizelement ausgebildet bzw. ausgerüstet werden können, die als Halbfabrikate der weiteren Formgebung zugeführt werden können. Dadurch, dass die Dekorschicht gemeinsam mit dem daran angeordneten bzw. integrierten Heizelement während der Ausbildung der Trägerschicht oder aber auch bereits während dem Schließen des Formhohlraums einer gewissen Verformung unterworfen ist, ist auch das Heizelement elastisch umformbar auszubilden. Für das Einbringen des Kunststoffmaterials zur Bildung der Trägerschicht ist auch eine ausreichende Temperaturbeständigkeit des an der Dekorschicht angeordneten bzw. ausgebildeten Heizelements notwendig. Dadurch wird es möglich, unterschiedlichste Dekormaterialien gemeinsam mit den daran angeordneten Heizelementen vorzufertigen und in einem anschließenden Spritzgießvorgang bei gleichzeitiger Umformung dieses Halbfabrikats das mehrlagige, räumliche Formteil herzustellen.

Eine weitere vorteilhafte Vorgehensweise ist im Anspruch 2 beschrieben, wodurch die Dekorschicht selbst, insbesondere jedoch dessen Rückseite, das Heizelement trägt und so eine einfache Herstellung des Halbfabrikats bei guter Wärmeabstrahlung erzielbar ist.

Weiters ist ein Vorgehen gemäß den im Anspruch 3 angegebenen Merkmalen vorteilhaft, weil dadurch für die Umformung des Dekormaterials das das Heizelemente bildende, elektrische Widerstandmaterial direkt in der Dekorschicht integriert ist und so einfach mit umverformt werden kann.

Eine weitere vorteilhafte Vorgehensweise ist im Anspruch 4 beschrieben, wodurch je nach Dichte der mit eingewobenen, elektrischen Widerstandsmaterialien die Intensität der Wärmeabstrahlung in Abhängigkeit von deren Dichte sowie der räumlichen Ausbildung des Formteils einfach festgelegt werden kann.

Vorteilhaft ist auch eine Verfahrensvariante gemäß Anspruch 5, weil so unabhängig vom gewählten Dekormaterial an exakt vorbestimmbaren Stellen das Heizelement ausgebildet werden kann und so eine einfache, individuelle Anpassung an unterschiedlichste Einsatzbedingungen durchführbar ist.

Eine weitere vorteilhafte Vorgehensweise ist im Anspruch 6 beschrieben, wodurch eine einfache Anpassung an unterschiedliche Anwendungsbedingungen erfolgen kann.

Weiters ist ein Vorgehen gemäß den im Anspruch 7 angegebenen Merkmalen vorteilhaft, weil dadurch das optische Erscheinungsbild des Formteils einfach und kostengünstig variiert werden kann.

Eine weitere vorteilhafte Vorgehensweise ist im Anspruch 8 beschrieben, wodurch je nach Anwendungsfall unterschiedlichste Oberflächentypen und Festigkeiten des Formteils erzielbar sind.

Vorteilhaft ist auch eine Verfahrensvariante gemäß Anspruch 9, weil dadurch eine noch höhere Gestaltungsvielfalt zur Ausbildung des Formteils erzielbar ist. Dadurch können auch einfach farblich abgestimmte Varianten erzielt werden und so eine hohe Gestaltungsmöglichkeit für den Innenraum des Kraftfahrzeugs erzielt werden.

Weiters ist ein Vorgehen gemäß den im Anspruch 10 angegebenen Merkmalen vorteilhaft, weil dadurch hin zur Karosserie bei eingebauten Formteilen eine Kontaktierung mit elektrischer Energie vermieden wird.

Eine weitere vorteilhafte Vorgehensweise ist im Anspruch 11 beschrieben, wodurch auf einfache Art und Weise eine Innenraumbeleuchtung an vorbestimmten Stellen geschaffen werden kann, welche ohne zusätzlicher, elektrischer Bauteile realisiert werden kann. Damit können auch großflächigere Leuchtmittel geschaffen werden, um den Innenraum des Kraftfahrzeuges beleuchten zu können. Darüber hinaus wäre es aber auch noch möglich, Warenhinweise oder Kennzeichnungen auf diese Weise sichtbar machen zu können. Dabei kann es sich um die Kennzeichnung von Feuerlöschern, Notausgängen usw. handeln.

Vorteilhaft ist auch eine Verfahrensvariante gemäß Anspruch 12, weil durch den Überstand des Dekormaterials die Trägerschicht randseitig von diesem umhüllt werden kann und so ein ansprechendes, optisches Aussehen geschaffen werden kann.

Eine weitere vorteilhafte Vorgehensweise ist im Anspruch 13 beschrieben, wodurch eine eindeutige Kontaktierung des Heizelements erfolgen kann, ohne dass dazu zusätzliche Anschlussleitungen zu installieren sind. Dieser elektrisch leitende Kontaktabschnitt kann beispielsweise schon während dem Herstellvorgang der Trägerschicht im Formhohlraum angeordnet und positioniert gehaltert werden und so in der Trägerschicht zumindest bereichsweise darin eingebettet werden. Der leitende Kontaktabschnitt könnte aber auch im Zuge eines weiteren Spritzgussvorganges an der Trägerschicht ausgebildet werden.

Weiters ist ein Vorgehen gemäß den im Anspruch 14 angegebenen Merkmalen vorteilhaft, weil dadurch eine großflächige Einbringung der elektrischen Energie in das Heizelement ermöglicht wird. Dadurch kann auch mit einem geringen, elektrischen Energieaufwand das Auslangen gefunden werden, um ein angenehmes Wärmeabstrahlungsverhalten für einen Benutzer zu erzielen.

Eine weitere vorteilhafte Vorgehensweise ist im Anspruch 15 beschrieben, wodurch eine einfache Kontaktierung des Formteils im Zuge des Einbaus in das Kraftfahrzeug erfolgen kann.

Vorteilhaft ist auch eine Verfahrensvariante gemäß Anspruch 16, weil so auf engstem Raume die Übertragung der elektrischen Energie ermöglicht wird und die elektrischen Kontaktelemente gegebenenfalls auch zusätzlich noch als Halte- bzw. Positionierelemente für das Formteil dienen können.

Weiters ist ein Vorgehen gemäß den im Anspruch 17 angegebenen Merkmalen vorteilhaft, weil so eine einfache Kontaktierung der Dekorschicht an den dafür vorgesehenen Stellen ermöglicht wird. Damit kann eine gezielte Einbringung der elektrischen Energie in das Heizelement erfolgen und so die Oberfläche der Dekorschicht zur Wärmeabstrahlung großflächig genutzt werden.

Schließlich ist eine weitere vorteilhafte Vorgehensweise im Anspruch 18 beschrieben, wodurch im Bereich des Heizelements eine noch bessere Kontaktierung an exakt vorbestimmbaren Stellen der Dekorschicht möglich ist.

Die Aufgabe der Erfindung kann aber auch durch einen Formteil gemäß den Merkmalen des Anspruches 19 gelöst werden. Der sich durch diesen Formteil ergebende Vorteil liegt darin, daß so je nach Anwendungsfall unterschiedlichste Dekorschichten mit dem entsprechenden Heizelement ausgebildet bzw. ausgerüstet werden können, die als Halbfabrikate der weiteren Formgebung zugeführt werden können. Dadurch, daß die Dekorschicht gemeinsam mit dem daran angeordneten bzw. integrierten Heizelement während der Ausbildung der Trägerschicht oder aber auch bereits während dem Schließen des Formhohlraums einer gewissen Verformung unterworfen ist, ist auch das Heizelement elastisch umformbar auszubilden. Für das Einbringen des Kunststoffmaterials zur Bildung der Trägerschicht ist auch eine ausreichende Temperaturbeständigkeit des an der Dekorschicht angeordneten bzw. ausgebildeten Heizelements notwendig. Dadurch wird es möglich, unterschiedlichste Dekormaterialien gemeinsam mit den daran angeordneten Heizelementen vorzufertigen und in einem anschließenden Spritzgießvorgang bei gleichzeitiger Umformung dieses Halbfabrikats das mehrlagige, räumliche Formteil herzustellen.

Eine weitere vorteilhafte Ausführungsform ist im Anspruch 20 beschrieben, wodurch eine eindeutige Kontaktierung des Heizelements erfolgen kann, ohne dass dazu zusätzliche Anschlussleitungen zu installieren sind. Dieser elektrisch leitende Kontaktabschnitt kann beispielsweise schon während dem Herstellvorgang der Trägerschicht im Formhohlraum angeordnet und positioniert gehaltert werden und so in der Trägerschicht zumindest bereichsweise darin eingebettet werden. Der leitende Kontaktabschnitt könnte aber auch im Zuge eines weiteren Spritzgussvorganges an der Trägerschicht ausgebildet werden.

Weiters ist eine Ausbildung gemäß den im Anspruch 21 angegebenen Merkmalen vorteilhaft, weil dadurch eine großflächige Einbringung der elektrischen Energie in das Heizelement ermöglicht wird. Dadurch kann auch mit einem geringen, elektrischen Energieaufwand das Auslangen gefunden werden, um ein angenehmes Wärmeabstrahlungsverhalten für einen Benutzer zu erzielen.

Eine weitere vorteilhafte Ausbildung ist im Anspruch 22 beschrieben, wodurch eine einfache Kontaktierung des Formteils im Zuge des Einbaus in das Kraftfahrzeug erfolgen kann.

Schließlich ist auch eine Ausführungsform gemäß Anspruch 23 vorteilhaft, weil so auf engstem Raume die Übertragung der elektrischen Energie ermöglicht wird und die elektrischen Kontaktelemente nicht nur als elektrisches Verbindungselement dienen sondern gegebenenfalls auch zusätzlich noch als Halte- bzw. Positionierelemente für das Formteil Verwendung finden können.

Zum besseren Verständnis der Erfindung wird diese anhand der nachfolgenden Figuren näher erläutert.

Es zeigen jeweils in stark schematisch vereinfachter Darstellung:
- Fig. 1: einen erfindungsgemäß ausgebildeten Formteil im Querschnitt sowie mit einem vereinfacht dargestellten Spritzgießwerkzeug;
- Fig. 2: einen Teilbereich einer weiteren möglichen Ausbildung eines Formteils im Quer- schnitt;
- Fig. 3: einen anderen Formteil in einer vereinfachten Ansicht auf seine Rückseite.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, daß diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

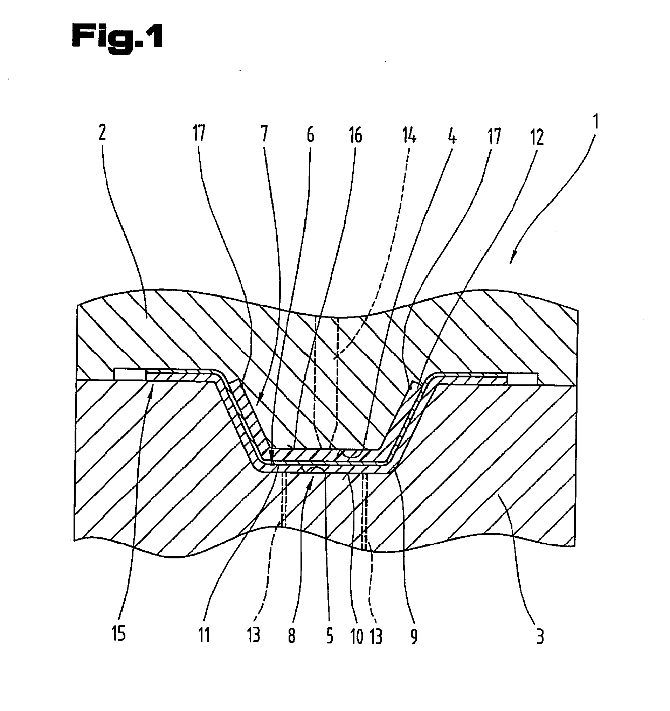

In der Fig. 1 ist vereinfacht ein Formwerkzeug, insbesondere ein Spritzgießwerkzeug 1 umfassend zumindest zwei Formteile, welche hier als obere und untere Formhälften 2, 3 bezeichnet sind, gezeigt.

In der hier dargestellten geschlossenen Position der beiden Formhälften 2, 3 umgrenzen diese mit Formwänden 4, 5 zumindest einen Formhohlraum 6.

Weiters sei einleitend auch noch bemerkt, dass die hier dargestellten Teile des Spritzgießwerkzeuges 1 sowie die räumliche Dimensionierung bzw. Formgebung des Formhohlraums 6 nur schematisch für eine Vielzahl von möglichen Ausbildungen zur Herstellung eines mehrlagigen räumlichen Formteils 7 gewählt ist und die Erfindung nicht auf die dargestellte Raum- bzw. Formgebung beschränkt ist. Es ist auch die zeitliche Abfolge der einzelnen nachfolgenden Schritte zur Herstellung des Formteils 7 nicht zwingend einzuhalten und können in deren zeitlichen Abfolge beliebig miteinander kombiniert bzw. auch gleichzeitig miteinander durchgeführt werden.

Bei dem herzustellenden mehrlagigen Formteil 7 kann es sich insbesondere um einen Verkleidungsteil 8 für ein Kraftfahrzeug handeln, welcher bevorzugt als Innenverkleidung dient. Dies könnten Verkleidungsteile für die Dachsäulen, den Himmel, oder aber auch Türverkleidungen usw. sein. Darüber hinaus können derartige Formteile 7 auch in Schienenfahrzeugen, Seilbahnkabinen, Liftsesseln, Stadionsitzen usw. Anwendung finden. Dieser mehrlagige Formteil 7 soll derart ausgebildet sein, dass dieser einen Bauteil bildet, welcher Wärmeenergie abgeben, insbesondere abstrahlen kann. Diese Wärmeenergie soll auf elektrischem Wege durch ein elektrisches Widerstandsmaterial im Zusammenwirken mit einer durch dieses hindurch geleiteten elektrischen Energie erzeugt werden.

Dazu weist das mehrlagige Formteil 7 zumindest eine Dekorschicht 9 auf, welche an einer einem Benutzer zuwendeten Seite eine Ansichtsseite 10 ausbildet. Weiters umfasst das Formteil 7 noch zumindest ein Heizelement 11, welches hier als eigene Lage auf der von der Ansichtsseite 10 abgewendeten Seite der Dekorschicht 9 dargestellt ist. Zur Versteifung des Formteils 7 ist weiters noch an der von der Ansichtsseite 10 abgewendeten Seite der Dekorschicht 9 bzw. des Heizelements 11 auch noch zumindest eine Trägerschicht 12 vorgesehen, welche beispielsweise durch ein in einem Spritzgussprozess verarbeitbares Material, insbesondere einem Kunststoffmaterial, gebildet sein kann.

Wie aus dieser vereinfachten Darstellung zu ersehen ist, ist das Heizelement 11 zwischen der Trägerschicht 12 und der Dekorschicht 9 angeordnet. Dabei kann im Querschnitt gesehen die Trägerschicht 12 kleiner bzw. kürzer ausgebildet sein als die Dekorschicht 9 sowie gegebenenfalls die daran angeordnete und das Heizelement 11 bildende Heizschicht.

Bevorzugt wird vor der Formgebung auf die von der Ansichtsseite 10 abgewendete Rückfläche der Dekorschicht 9 zumindest bereichsweise das Heizelement 11 angeordnet bzw. aufgebracht. Anschließend daran wird dieses Halbfabrikat umfassend die Dekorschicht 9 sowie das Heizelement 11 in den durch die Formwände 4, 5 begrenzten und in der geöffneten Stellung vorgesehenen Formhohlraum 6 des Spritzgießwerkzeuges 1 eingelegt. Anschließend daran wird der Formhohlraum 6 durch entsprechende Verlagerung zumindest einer der Formhälften 2, 3 geschlossen. Dabei kann bereits während dem Schließen eine gewisse Verformung der zumeist ebenflächig ausgebildeten Dekorschicht 9 gemeinsam mit dem Heizelement 11 erfolgen. Zur Erleichterung dieser Vorverformung kann es vorteilhaft sein, wenn im Bereich der Ansichtsseite 10 der Dekorschicht 9 in den Formhohlraum 6 zumindest eine, bevorzugt mehrere Absaugleitungen 13 einmünden, mit welchen mittels nicht näher dargestellter Aggregate ein Differenzdruck zwischen der Rückseite der Dekorschicht 9 und deren Ansichtsseite 10 ausgebildet werden kann. In Abhängigkeit von der gewählten Dekorschicht und/oder dem gewählten Heizelement 11 kann dies bis zu einem Ansaugeffekt führen.

Zur endgültigen Ausbildung des Formteils 7 wird in den verbleibenden freien Formhohlraum 6 das zur Bildung der Trägerschicht 12 vorgesehene Material, insbesondere der erweichte Kunststoff eingespritzt und dadurch die Dekorschicht 9 mitsamt dem Heizelement 11 umgeformt. Dies erfolgt durch den aufgebauten Spritzdruck beim Ausbilden der Trägerschicht 12. Der Werkstoff zur Bildung der Trägerschicht 12 wird zumeist an der von der Ansichtsseite 10 abgewendeten Seite der Dekorschicht 9 in den Formhohlraum 6 eingespritzt, wie dies vereinfacht durch einen Einspritzkanal 14 dargestellt ist. So wird die Dekorschicht 9 gemeinsam mit dem Heizelement 11 umgeformt und an die der Ansichtsseite 10 benachbarte bzw. gegenüberliegende Formwand 5 angelegt, wie dies vereinfacht in der Fig. 1 dargestellt worden ist. Beim Einbringen des Werkstoffes zur Bildung der Trägerschicht 12 erfolgt ein stoff- und/oder formschlüssiges Anformen an das Heizelement 11 und/oder die Dekorschicht 9, wodurch nach dem Erkalten ein stabiler Formteil 7 erhalten wird.

Das Einbringen des erweichten und aufbereiteten Kunststoffmaterials kann bereits bei noch nicht ganz geschlossenem Formhohlraum 6 beginnen bzw. erfolgen, wobei dann erst nachfolgend der Formhohlraum 6 geschlossen wird. Dies kann noch während dem Einbringen erfolgen und bis zum vollständigen Schließen fortgesetzt werden. Es wäre aber auch möglich, nach dem Einlegen der Dekorschicht 9 mitsamt dem Heizelement 11 den Formhohlraum 6 ganz zu schließen und erst nachfolgend das aufbereitete Kunststoffmaterial einzubringen, insbesondere einzuspritzen.

Die Dekorschicht 9 kann ihrerseits beispielsweise aus der Gruppe von Gewebe, Geflechten, Gestricken und/oder Folien gewählt sein. Dabei kann der Werkstoff zur Bildung der Dekorschicht 9 organischen und/oder anorganischen Ursprungs sein.

Das zur Bildung des Heizelements 11 vorgesehene elektrische Widerstandsmaterial kann aus der Gruppe von elektrisch leitenden Lacken, Kunststoffen, Folien, Fäden, Fasern, gewählt sein. In Abhängigkeit von dem gewählten elektrischen Widerstandsmaterial kann dann die Dekorschicht 9 mit diesem zur Bildung des Heizelements 11 beschichtet und/oder imprägniert, insbesondere damit getränkt sein. Ist hingegen das das Heizelement 11 bildende elektrische Widerstandsmaterial faden- bzw. faserförmig ausgebildet, kann dieses mit der Dekorschicht 9 verwoben und/oder verstrickt sein. Es wäre aber auch eine beliebige Kombination der zuvor beschriebenen Möglichkeiten zur Bildung des Heizelements 11 denkbar.

Wesentlich bei all diesen zuvor beschriebenen Widerstandsmaterialien ist, dass diese zur Bildung des Heizelements 11 einerseits temperaturbeständig ausgebildet sind, um beim Ausbilden der Trägerschicht 12 durch den erweichten Kunststoff keinen Schaden zu nehmen und andererseits auch noch zusätzlich eine räumliche Verformung ausgehend von der zumeist ebenflächigen Lage hin zum räumlichen Formteil 7 zu ermöglichen. Diese Umformungsbewegung ist vom elektrischen Widerstandsmaterial ohne Schaden zu nehmen zu gewährleisten, da ansonst im späteren beabsichtigten Verwendungszweck keine einwandfreie Funktion, insbesondere die elektrische Leitfähigkeit unterbrochen wird und so in weiterer Folge keine oder nur eine eingeschränkte Abgabe der Wärmeenergie möglich ist.

Unabhängig davon wäre es aber auch noch möglich, das das Heizelement 11 bildende elektrische Widerstandsmaterial an bzw. auf die Dekorschicht 9 anzuformen, wie dies beispielsweise durch einen eigenen Spritzgussvorgang durch Aufspritzen möglich wäre. Dies könne entweder dadurch erfolgen, dass die Dekorschicht 9 in einem eigenen Spritzgusswerkzeug damit zumindest bereichsweise beschichtet bzw. das elektrische Widerstandsmaterial aufgebracht wird oder dass das Herstellen der Dekorschicht 9 im gleichen Spritzgießwerkzeug 1 erfolgt, in dem auch der Formteil 7 hergestellt wird. Dies könnte beispielsweise durch einen Zweikomponenten - Spritzgussvorgang realisiert werden.

Um einen gewissen Isolationseffekt an der von der Ansichtsseite 10 abgewendeten Seite der Dekorschicht 9 zu erzielen, ist es vorteilhaft, wenn die Trägerschicht 12 aus einem elektrisch isolierenden Material gebildet wird. Weiters kann es vorteilhaft sein, wenn die Trägerschicht 12 randseitig zumindest abschnittsweise von einem äußeren Rand 15 der Dekorschicht 9 distanziert dazu ausgebildet ist. Dies bedeutet, dass die Trägerschicht 12 zumindest abschnittsweise von der Dekorschicht 9 sowie der daran angeordneten und das Heizelement 11 bildenden elektrischen Widerstandsschicht überragt ist. Die Dekorschicht 9 mit dem Heizelement 11 bildet einen Randstreifen aus, welcher um die Stirnkante der Trägerschicht 12 auf die von der Ansichtsseite 10 abgewendete Rückseite umgeschlagen werden kann. Eine mögliche Kontaktierung des Heizelements 11 wird nachfolgend noch beschrieben werden. Dadurch wird es möglich, die Trägerschicht 12 randseitig mit einem so genannten Umschlag der Dekorschicht 9 einzuhüllen. Der überstehende Rand 15 bzw. der dadurch ausgebildete Randstreifen der Dekorschicht 9 kann dann in den Bereich einer Rückseite 16 der Trägerschicht 12 um- bzw. eingeschlagen werden, wodurch eine gute optische Abdeckung und damit verbunden ein einwandfreies Erscheinungsbild des gesamten Formteils 7 erzielbar ist.

In diesem Zusammenhang ist es vorteilhaft, wenn an der von der Ansichtsseite 10 des Dekormaterials 9 abgewendeten Rückseite 16 der Trägerschicht 12 zumindest ein erster elektrisch leitender Kontaktabschnitt 17 angeordnet bzw. ausgebildet wird. Im vorliegenden Ausführungsbeispiel ist im Bereich der beiden im Querschnitt gesehen gegenüberliegenden Enden der Trägerschicht 12 jeweils ein Kontaktabschnitt 17 vereinfacht dargestellt. Dieser oder die Kontaktabschnitte 17 wird/werden durch den umgeschlagenen Teil der Dekorschicht 9 sowie dem daran angeordneten Heizelement 11 elektrisch kontaktiert, wodurch der gesamte Formteil 7 im Bereich seiner Ansichtsseite 10 im Zuge des elektrischen Stromdurchtritts erwärmt werden kann und dadurch die gewünschte Wärmeabgabe erfolgt. Um einen möglichst flächenmäßig großen Abstrahlbereich zu erzielen, ist es vorteilhaft, wenn der oder die elektrisch leitenden Kontaktabschnitte 17 in einem umlaufenden Randbereich der Trägerschicht 12 ausgebildet wird oder werden. Dabei ist in Abhängigkeit von der Formgebung des Formteils 7 auf eine entsprechende Anordnung der Kontaktabschnitte 17 für eine einwandfreie Kontaktierung Sorge zu tragen.

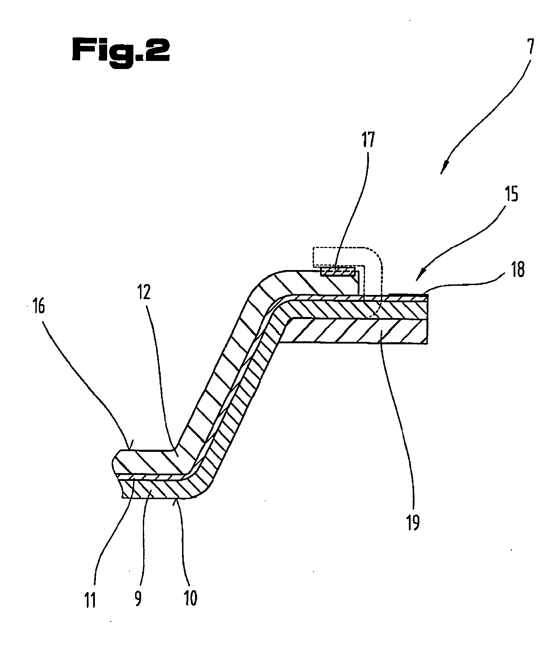

In der Fig. 2 ist eine weitere mögliche und gegebenenfalls für sich eigenständige Ausführungsform zur Ausbildung des Formteils 7 gezeigt, wobei wiederum für gleiche Teile gleiche Bauteilbezeichnungen bzw. Bezugszeichen wie in der vorangegangenen Fig. 1 verwendet werden. Um unnötige Wiederholungen zu vermeiden, wird auf die detaillierte Beschreibung in der Fig. 1 hingewiesen bzw. Bezug genommen.

Auch dieser Formteil 7 umfasst wiederum im Bereich seiner Ansichtsseite 10 die Dekorschicht 9 sowie das bevorzugt dahinter angeordnete Heizelement 11. An der von der Ansichtsseite 10 abgewendeten Rückseite ist zumindest bereichsweise wiederum die Trägerschicht 12 vorgesehen, wobei randseitig vereinfacht der Kontaktabschnitt 17 zur Kontaktierung mit dem das Heizelement 11 bildenden elektrischen Widerstandsmaterial dargestellt ist. In zumindest einem Bereich des Randes 15 der Dekorschicht 9 sowie des Heizelements 11 ist noch vereinfacht dargestellt, dass an dieser zumindest abschnittsweise ein zusätzlicher elektrisch leitender Kontaktabschnitt 18 angeordnet bzw. ausgebildet ist, welcher in elektrisch leitender Verbindung mit dem Heizelement 11 bzw. dem das Heizelement 11 bildenden elektrischen Widerstandsmaterial steht. Dieser weitere leitende Kontaktabschnitt 18 kann beispielsweise nach entsprechendem Umschlagen des Randes 15 mit dem ersten Kontaktabschnitt 17 im Bereich der Trägerschicht 12 kontaktiert werden.

Zusätzlich oder unabhängig davon ist es aber auch noch möglich, dass beispielsweise randseitig des Formteils 7 an diesem zumindest ein weiterer Bauteil 19 vorgesehen bzw. angeordnet ist, um einen optisch abschliessenden Abschluss des Formteils 7 auszubilden. Dieser Bauteil 19 kann während der Herstellung des Formteils 7 bereits vor dem Einlegen der Dekorschicht 9 mit dem Heizelement 11 in den zuvor beschriebenen Formhohlraum 6 eingelegt und gegebenenfalls positioniert gehalten werden oder aber auch mittels eines eigenen Spritzgießvorganges im Formhohlraum 6 ausgebildet werden. Anschließend daran kann wiederum zur Herstellung des Formteils 7 zuerst die Dekorschicht 9 mit dem daran angeordneten Heizelement 11 in den Formhohlraum 6 eingelegt werden, in welchem bereits der Bauteil 19 hergestellt worden ist. Anschließend daran wird die Trägerschicht 12 wie bereits zuvor beschrieben, ausgebildet.

Unabhängig davon wäre es aber auch noch möglich, die Dekorschicht 9 mit dem Heizelement 11 in den Formhohlraum 6 des Spritzgießwerkzeuges 1 einzulegen und anschließend in einem Spritzgussvorgang einerseits die Trägerschicht 12 und andererseits den Bauteil 19 auszubilden. Dies kann zeitlich zueinander versetzt oder aber auch gleichzeitig erfolgen. Auch die Anwendung eines Zweikomponenten - Spritzgussvorganges wäre dabei denkbar.

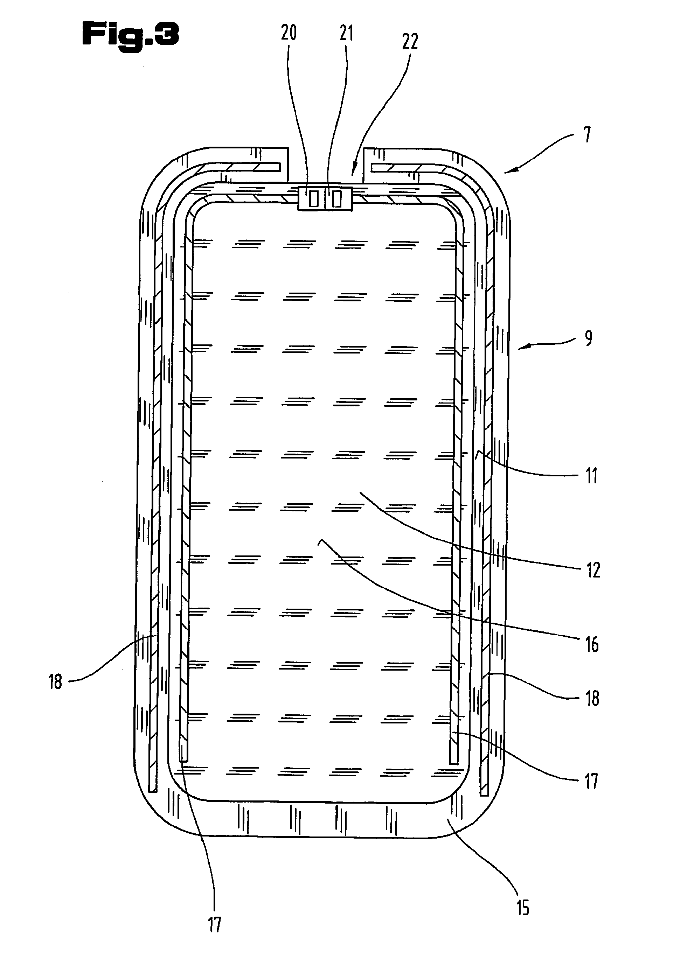

In der Fig. 3 ist eine weitere und gegebenenfalls für sich eigenständige Ausführungsform des Formteils 7 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Diese Darstellung zeigt den Formteil 7 bei einer Ansicht auf seine Rückseite 16 wobei die die Ansichtsseite 10 bildende Dekorschicht 9 in einer Lage bzw. Position dargestellt ist, in welcher sie mit ihrem Rand 15 die Trägerschicht 12 randseitig zumindest bereichsweise überragt. Es ist wiederum auch an der von der Ansichtsseite 10 abgewendeten Rückseite der Dekorschicht 9 wiederum das Heizelement 11 angeordnet, wobei zusätzlich hier noch dargestellt ist, dass das Heizelement 11 mit eigenen Kontaktabschnitten 18 sein kann.

An der Rückseite 16 der Trägerschicht 12 ist der zuvor beschriebene erste Kontaktabschnitt 17 randseitig zur Trägerschicht 12 verlaufend angeordnet bzw. dort ausgebildet. Die beiden hier links und rechts längsseitig verlaufenden Kontaktabschnitte 17 sind im hier oberen Bereich des Formteils 7 mittels eigener Kontaktelemente 20, 21 in einem Anschlussbereich 22 verbunden. Dabei ist jedem der Kontaktelemente 20, 21 jeweils nur einer der Kontaktabschnitte 17 zugeordnet und damit elektrisch leitend verbunden. Bevorzugt sind die elektrischen Kontaktelemente 20, 21 unmittelbar benachbart nebeneinander, jedoch elektrisch voneinander isoliert angeordnet bzw. ausgebildet. Das oder die Kontaktelemente 20, 21 können dann auch gleich einen Teil einer Steckverbindung wie beispielsweise einen Stecker oder eine Kupplung bilden. Damit wird es möglich, das gesamte Formteil 7 nicht nur über diese Elemente mit elektrischer Energie zu versorgen sonder gegebenenfalls auch noch damit die Halterung des Formteils 7 an einem Rahmenteil oder dergleichen zu bewerkstelligen.

Auch hier ist wiederum vorgesehen, dass die Dekorschicht 9 mit dem Heizelement 11 bevorzugt unter Zwischenschaltung der weiteren Kontaktabschnitte 18 mit den Kontaktabschnitten 17 an der Trägerschicht 12 kontaktiert wird. Dadurch wird es wiederum möglich, ausgehend über die Kontaktelemente 20, 21 elektrische Energie leitend über die ersten Kontaktabschnitte 17, gegebenenfalls unter Zwischenschaltung der weiteren Kontaktabschnitte 18, hin auf das Heizelement 11 zu übertragen und mittels des Heizelements 11 die gewünschte Heizwirkung des Formteils 7 zu erzielen.

Weiters wäre es aber auch noch möglich, dass im Bereich der Dekorschicht 9 in oder an dieser eine zusätzliche Schicht, wie eine Leuchtfolie ausgebildet wird, welche bei Beaufschlagung mit elektrischer Energie sichtbares Licht abgibt. Die Kontaktierung kann dabei getrennt zur Kontaktierung des Heizelements 11 und/oder aber auch gemeinsam damit erfolgen.

Das herzustellende Formteil 7 weist einen mehrlagigen Schichtaufbau auf. Bevorzugt umfasst das Formteil 7 zumindest eine Trägerschicht 12, zumindest eine Dekorschicht 9, das Heizelement 11 sowie eine zumindest bereichsweise zwischen der Trägerschicht 12 und der Dekorschicht 9 angeordnete, hier jedoch nicht näher dargestellte zusätzliche Zwischenschicht.

Für den Herstellungsvorgang des Formteils 7 wird zumeist die Dekorschicht 9 mit dem Heizelement 11 im Formhohlraum 6 angeordnet und nachträglich die Trägerschicht 12 entweder als aufbereitetes erweichtes Kunststoffmaterial oder aber auch als fertige Schicht ebenfalls in den Formhohlraum 6 eingebracht. An jenen vorbestimmten Stellen, an welchen die Zwischenschicht ausgebildet werden soll, wird zwischen der Trägerschicht 12 und dem Heizelement 11 bzw. der Dekorschicht 9 ein Hohlraum vorgesehen bzw. ausgebildet. Durch die Anordnung der Trägerschicht 12 sowie der Dekorschicht 9 im Bereich der Formwände des Spritzgießwerkzeuges 1 und dem zumindest bereichsweise dazwischen ausgebildeten Hohlraum bzw. der Hohlräume, erfolgt während dem Einbringen bzw. Ausbilden der Zwischenschicht kein Kontakt des dafür vorgesehenen Werkstoffes mit den Formwänden des Spritzgießwerkzeuges 1, wodurch auf entsprechende Trennmittel bzw. zusätzliche Reinigungsvorgänge verzichtet werden kann. Dadurch können größere Wartungsintervalle erzielt werden und gewisse Standardwartungen fallen in einem größeren Zeitintervall an, wodurch eine höhere Produktivität des Spritzgießwerkzeuges 1 erzielt wird. Dadurch wird nun auch die Möglichkeit geschaffen, in eigenen Arbeitsgängen sowohl die Dekorschicht 9 als auch die Trägerschicht 12 jeweils in ihrer gewünschten Formgebung festlegen zu können und erst anschließend daran an den dafür vorbestimmten Stellen bzw. Positionen die Zwischenschicht in der vorgesehenen Dicke und Härte auszubilden.

Der zwischen der Dekorschicht 9 und der Trägerschicht 12 angeordnete bzw. ausgebildete Hohlraum zur Aufnahme bzw. Ausbildung der Zwischenschicht kann mit einer über dessen Flächenausdehnung gesehen unterschiedlichen Stärke und/oder Flächenausdehnung ausgebildet werden. Dadurch wird es möglich, an vordefinierten Stellen eine unterschiedliche Elastizität bzw. Nachgiebigkeit und damit verbundene Weichheit des Formteils 7 an den dafür vorbestimmten Stellen zu erzielen. Durch eine unterschiedliche Wahl der Werkstoffe zur Bildung der Zwischenschicht sowie der Anordnung derselben am herzustellenden Formteil 7 ist es möglich, das Formteil 7 individuell an unterschiedlichste Einsatzbedingungen anpassen zu können. Werden weiche und elastisch verformbare Abschnitte gewünscht, können zwischen den beiden Schichten 9, 12 auch Gase, Flüssigkeiten, Gele oder ähnliches eingebracht werden. Dabei ist auf eine entsprechende Dichtheit der beiden Schichten 9, 12 in Bezug auf Gas- und/oder Flüssigkeitsdichtheit zu achten. Damit lässt sich ein so genannter "Pad-Effekt" erzielen.

So kann einerseits die Wärmeabstrahlung auf die von der Trägerschicht 12 abgewendete Seite verbessert und andererseits auch noch ein Formteil 7 mit variabler Schaumdicke durch die Anordnung der Zwischenschicht gebildet werden. Bevorzugt wird die Zwischenschicht ebenfalls durch einen eigenen Einspritzvorgang im Hohlraum ausgebildet. Das die Zwischenschicht bildende Material kann aus einem insbesondere schäumbaren und/oder aufquellbaren Kunststoffmaterial, wie beispielsweise einem Kunststoffschaum gebildet sein, wobei dieser aus der Gruppe von Polyurethan (PU), einem thermoplastischen Elastomer (TPE) gewählt wird. Unter dem Begriff "schäumbar" bzw. "aufquellbar" wird dabei verstanden, dass sich das Volumen des in den Hohlraum eingebrachten Werkstoffes vergrößert bzw. sich dieses in seiner Porosität verdichtet. Es wäre aber auch ein Polymerer Werkstoff möglich, der sowohl in geschäumtem oder nicht geschäumtem Zustand zur Anwendung kommen kann. Wird ein Kunststoffschaum gewählt, wird dieser in fließfähigem Zustand in den Hohlraum 9 eingebracht und kann dort entsprechend aufschäumen, bis dieser seinen verfestigten Zustand erreicht hat. Über die Zwischenschicht kann auch bevorzugt die Verbindung zwischen der Trägerschicht 12 und der Dekorschicht 9 erfolgen, wobei dies von den die Zwischenschicht bildenden Werkstoffen bzw. deren Kombination abhängt. Zumeist werden elastisch verformbare Werkstoffe für die Zwischenschicht eingesetzt, wobei aber auch eine beliebige Kombination derselben in unterschiedlichen Abschnitte bzw. Hohlräumen erfolgen kann. Diese Werkstoffe können ausgehend von einem sehr geringen Elastizitätsmodul bis hin zu einem hohen Elastizitätsmodul ausgewählt sein. Werden z.B. inelastisch bleibend verformbare Werkstoffe für die Zwischenschicht eingesetzt, bieten diese einen wirksamen Aufprallschutz zur Umwandlung kinetischer Energie bei einem Unfall. Je geringer der E-Modul ist, desto elastischer und weicher kann die Zwischenschicht gestaltet werden. Dies kann z.B. bei einer Armlehne einen weicheren Abstützbereich darstellen, der zusätzlich noch Wärme abstrahlen kann.

Die Ausführungsbeispiele zeigen mögliche Ausführungsvarianten des Formteils 7, wobei an dieser Stelle bemerkt sei, daß die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Formteils 7 dieser bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenanfstellung

- 1: Spritzgiesswerkzeug
- 2: obere Formhälfte
- 3: untere Formhälfte
- 4: Formwand
- 5: Formwand

- 6: Formhohlraum
- 7: Formteil
- 8: Verkleidungsteil
- 9: Dekorschicht
- 10: Ansichtsseite

- 11: Heizelement
- 12: Trägerschicht
- 13: Absaugleitung
- 14: Einspritzkanal
- 15: Rand

- 16: Rückseite
- 17: Kontaktabschnitt
- 18: Kontaktabschnitt
- 19: Bauteil
- 20: Kontaktelement

- 21: Kontaktelement
- 22: Anschlussbereich

## Patentansprüche

1. Verfahren zur Herstellung eines mehrlagigen räumlichen Formteils (7), insbesondere eines Verkleidungsteils (8) für ein Kraftfahrzeug, bei dem eine Trägerschicht (12), eine Dekorschicht (9) und ein Heizelement (11) ausgebildet werden und dabei das Heizelement (11) zwischen der Trägerschicht (12) und der Dekorschicht (9) angeordnet wird, **gekennzeichnet durch** folgende Schritte:
⇒ Einlegen der Dekorschicht (9) gemeinsam mit einem das Heizelement (11) bildenden elektrischen Widerstandsmaterial in einen **durch** Formwände (4, 5) begrenzten Formhohlraum (6) eines Spritzgießwerkzeuges (1);
⇒ Einspritzen eines zur Bildung der Trägerschicht (12) vorgesehenen erweichten Kunststoffmaterials in den Formhohlraum (6) auf der von einer Ansichtsseite (10) der Dekorschicht (9) abgewendeten Seite;
⇒ Schließen des Formhohlraums (6) des Spritzgießwerkzeuges (1);
⇒ Ausbilden der Trägerschicht (12), wobei **durch** den aufgebauten Spritzdruck oder Schließdruck des Spritzgießwerkzeuges (1) die Dekorschicht (9) gemeinsam mit dem Heizelement (11) umgeformt und an die der Ansichtsseite (10) benachbarte Formwand (5) angelegt wird.

2. Verfahren nach Anspruch 1, **dadurch gekennzeichnet, dass** die Dekorschicht (9) mit dem das Heizelement (11) bildenden elektrischen Widerstandsmaterial beschichtet wird.

3. Verfahren nach Anspruch 1 oder 2, **dadurch gekennzeichnet, dass** die Dekorschicht (9) mit dem das Heizelement (11) bildenden elektrischen Widerstandsmaterial imprägniert, insbesondere damit getränkt wird.

4. Verfahren nach einem der vorhergehenden Ansprüche, **dadurch gekennzeichnet, dass** die Dekorschicht (9) mit dem das Heizelement (11) bildenden elektrischen Widerstandsmaterial verwoben und/oder verstrickt wird.

5. Verfahren nach einem der vorhergehenden Ansprüche, **dadurch gekennzeichnet, dass** das das Heizelement (11) bildende elektrische Widerstandsmaterial auf die Dekorschicht (9) angeformt, insbesondere in einem Spritzgussvorgang aufgespritzt, wird.

6. Verfahren nach einem der vorhergehenden Ansprüche, **dadurch gekennzeichnet, dass** das elektrische Widerstandsmaterial aus der Gruppe von elektrisch leitenden Lacken, Kunststoffen, Folien, Fäden, Fasern gewählt wird.

7. Verfahren nach einem der vorhergehenden Ansprüche, **dadurch gekennzeichnet, dass** die Dekorschicht (9) aus der Gruppe von Geweben, Geflechten, Gestricken oder Folien gewählt wird.

8. Verfahren nach einem der vorhergehenden Ansprüche, **dadurch gekennzeichnet** die Dekorschicht (9) aus der Gruppe aus einem organischen und/oder anorganischen Werkstoff gewählt wird.

9. Verfahren nach einem der vorhergehenden Ansprüche, **dadurch gekennzeichnet, dass** in den Formhohlraum (6) vor dem Einlegen der Dekorschicht (9) mit dem Heizelement (11) in diesen zumindest ein weiterer Bauteil (19) eingelegt oder im Formhohlraum (6) eigens ausgebildet wird und anschließend die Trägerschicht (12) durch den Spritzgießvorgang ausgebildet wird.

10. Verfahren nach einem der vorhergehenden Ansprüche, **dadurch gekennzeichnet, dass** die Trägerschicht (12) aus einem elektrisch isolierenden Material gebildet wird.

11. Verfahren nach einem der vorhergehenden Ansprüche, **dadurch gekennzeichnet, dass** in oder an der Dekorschicht (9) eine zusätzliche Schicht wie eine Leuchtfolie ausgebildet wird, welche bei Beaufschlagung mit elektrischer Energie sichtbares Licht abgibt.

12. Verfahren nach einem der vorhergehenden Ansprüche, **dadurch gekennzeichnet, dass** die Trägerschicht (12) randseitig zumindest abschnittsweise von einem äußeren Rand (15) der Dekorschicht (9) distanziert dazu ausgebildet wird.

13. Verfahren nach einem der vorhergehenden Ansprüche, **dadurch gekennzeichnet, dass** an einer von der Ansichtsseite (10) des Dekormaterials (9) abgewendeten Rückseite (16) der Trägerschicht (12) zumindest ein erster elektrisch leitender Kontaktabschnitt (17) ausgebildet wird.

14. Verfahren nach Anspruch 13, **dadurch gekennzeichnet, dass** der oder die elektrisch leitende(n) Kontaktabschnitt(e) (17) in einem umlaufenden Randbereich der Trägerschicht (12) ausgebildet wird oder werden.

15. Verfahren nach Anspruch 13 oder 14, **dadurch gekennzeichnet, dass** die elektrisch leitenden Kontaktabschnitte (17) in einem Anschlussbereich (22) jeweils mit einem elektrischen Kontaktelement (20,21) verbunden werden.

16. Verfahren nach Anspruch 15, **dadurch gekennzeichnet, dass** die elektrischen Kontaktelemente (20,21) unmittelbar benachbart nebeneinander, jedoch elektrisch voneinander isoliert, angeordnet werden.

17. Verfahren nach einem der Ansprüche 13 bis 16, **dadurch gekennzeichnet, dass** die Dekorschicht (9) mit seinem Heizelement (11) mit den ersten leitenden Kontaktabschnitten (17) kontaktiert wird.

18. Verfahren nach einem der vorhergehenden Ansprüche, **dadurch gekennzeichnet, dass** an der Dekorschicht (9) zumindest abschnittsweise ein zusätzlicher elektrisch leitender Kontaktabschnitt (18) ausgebildet wird und dieser mit dem oder den ersten leitenden Kontaktabschnitt(en) (17) kontaktiert wird oder werden.

19. Mehrlagiger Formteil (7), insbesondere Verkleidungsteil für ein Kraftfahrzeug, umfassend eine Trägerschicht (12), eine Dekorschicht (9) und ein ein Heizelement (11) bildendes elektrisches Widerstandsmaterial, **dadurch gekennzeichnet, dass** das elektrische Widerstandsmaterial in der Dekorschicht (9) integriert ist und die Trägerschicht (12) an einer von einer Ansichtsseite (10) abgewendeten Seite angeformt, insbesondere daran angespritzt, ist.

20. Formteil (7) nach Anspruch 19, **dadurch gekennzeichnet, dass** einer von der Ansichtsseite (10) des Dekormaterials (9) abgewendeten Rückseite (16) der Trägerschicht (12) zumindest ein erster elektrisch leitender Kontaktabschnitt (17) ausgebildet ist.

21. Formteil (7) nach Anspruch 20, **dadurch gekennzeichnet, dass** der oder die elektrisch leitende(n) Kontaktabschnitt(e) (17) in einem umlaufenden Randbereich der Trägerschicht (12) ausgebildet ist oder sind.

22. Formteil (7) nach Anspruch 20 oder 21, **dadurch gekennzeichnet, dass** die elektrisch leitenden Kontaktabschnitte (17) in einem Anschlussbereich (22) jeweils mit einem elektrischen Kontaktelement (20,21) verbunden sind.

23. Formteil (7) nach Anspruch 22, **dadurch gekennzeichnet, dass** die elektrischen Kontaktelemente (20,21) unmittelbar benachbart nebeneinander, jedoch elektrisch voneinander isoliert, angeordnet sind.
